# EUROPEAN PATENT SPECIFICATION

(11) **EP 1 316 353 B1**
(45) Date of publication and mention of the grant of the patent: **25.04.2007**
(21) Application number: 02445158.5
(22) Date of filing: 22.11.2002
(51) Int. Cl.: B01D 53/64

(54) **A method for eliminating traces of mercury in gases**
Verfahren zum Eliminieren von Spuren von Quecksilber in Gasen
Procédé pour l'élimination de traces de mercure dans des gaz

(30) Priority: 28.11.2001 SE 0103972
(43) Date of publication of application: 04.06.2003
(73) Proprietor: Outokumpu Technology AB, 931 27 Skellefteå (SE)
(72) Inventor: Allgulin, Torkel, 253 67 Helsingborg (SE)
(74) Representative: Köykkä, Aira Annikki

(56) References cited:
- DE-A- 2 150 592
- DE-C- 4 315 138
- US-A- 3 786 619
- US-A- 4 009 241
- US-A- 4 206 183
- US-A- 4 233 274
- US-A- 4 729 882
- US-A1- 2001 007 647

## Description

The present invention relates to a method of an essentially complete elimination of remaining traces of mercury in gases, such as roaster gases containing SO₂, and which have been treated in a chloride washer for removing elementary Hg.

The majority of countries have extremely stringent requirements with regard to the emission of mercury from industrial processes. Gases that contain elementary mercury have constituted one of the greatest sources of the emission of industrial mercury to the environment, and many new gas-cleaning processes have been proposed during the last twenty-five years for eliminating the elementary mercury from such gases. However, the majority of these proposed gas cleaning processes, and particularly those that are most efficient, are technically much too complicated and require the use of expensive, special apparatus or sophisticated reactants and additives in order to be able to achieve a satisfactory result.

One of the few processes that has won wide use in practice and that also belongs to the most effective processes and has therefore dominated the market at least with regard to its application in the metallurgical field is the so-called "Boliden-Norzink Process", also referred to as the "chloride process". The process, of which various embodiments are described in more detail in US-A 3,849,537, US-A 4,233,274 and US-A 4,640,751, and recently in a modern version in WO98/53900, is carried out in a washing plant that includes a separate absorption tower in which a washing solution, which in addition to its mercury (II) chloride content will also contain any sulphur dioxide extracted from the gas, and extracted and separated mercury in the form of solid mercury (I) chloride (calomel Hg₂Cl₂), is sprayed through nozzles over packing bodies and the solution thereafter collected at the bottom of the tower. The mercury vapour, i.e. elementary mercury Hg°, present in the gas is oxidised quickly and effectively in the absorption tower with the aid of the mercury (II) chloride in the wash solution, to form solid mercury (I) chloride. The wash solution leaving the absorption tower is caused to circulate in an essentially closed system.

The gas which has been cleaned from elementary Hg in a chloride washing plant can normally be led further for example to a sulphuric acid production or to the atmosphere, in those cases the gas does not contain SO₂, and the gas thus fulfils current environmental requirements without the need of further decreasing the Hg content of the gas. However, in special cases demand have been raised on an essentially elimination of remaining traces of Hg in the gas.

It has, for example, in US-A- 4,233,274 been suggested the use of a further chloride washing step having an essential lower amount of Hg₂Cl₂ compared with the main washer for the elimination of remaining elementary mercury in the gas in order to, if possible, obtain a complete elimination of traces of Hg (Hg°) in the gas. Such a total elimination of remaining traces of Hg the gas is, however, not obtained using a further chloride washing step, but a remaining hg amount is still present, however with a decreased amount, but not totally eliminated despite the use of double chloride washing steps.

Said demands have, thus, been difficult to comply with, both for technical and economical reasons, since traces of Hg present in the gas have been found to be of varied chemical and physical kind and it has been found difficult to trap enough content of Hg bearing components in such an after-treatment. The gas coming from a chloride washer may, besides remaining traces of elementary Hg, thus contain traces of Hg in the form of material particles containing Hg compounds carried away from the washing step. They are present in a suspended form in the gas, for example newly-formed Hg₂Cl₂ mist, and carried away liquid drops of washing liquid containing HgCl₂ and coming from the chloride washer as well as HgCl₂ vapour.

Filters for cleansing of gases from small contents of elementary Hg exist in many variations, but they cannot eliminate those traces of Hg of different physical and chemical kind as discussed above. There are for example carbon filters of different kinds, for example those described in DE-B-21 50 592, but they have certain disadvantages due to a non-wanted condensation of water, and selenium filters which are described in US-A-3,786,619, which both filter types are effective for small contents of gaseous elementary Hg, but they are not so good for other Hg bearing components. The same regards the processes having been patented by Dowa Mining which are based on the use of sulphur and sulphides, for example, especially activated metal sulphides, which are described in US-A-4, 206,183, and a couple of subsequent Japanese patents, which especially relate to the use of different kinds of metal sulphides, synthetic and natural (such as lead sulphide ore). Those processes and means cannot with a greater efficiency be used to eliminate such traces of Hg, which may be found in a gas being treated in a chloride washer.

It has now surprisingly been found possible in a technically very elegant mode, which also is economically not prohibitive, to obtain such a desirable essentially total elimination of all those mercury containing components present in the outgoing gas from a chloride washer, so that all traces of Hg essentially have been removed. This is attended to by the process according to the invention in a method and using the steps as set forth by the claims.

According to the invention the gas is introduced to a scrubber plant where the same is washed with a washing liquid such that any content of gaseous HgCl₂ in the gas is absorbed by the washing liquid and under such heavy turbulence and, thus, a heavy mechanical action as to separate any Hg, HgCl₂ and Hg₂Cl₂ and other compounds of Hg present in particle or drop form are put together physically into bigger aggregates or agglomerates and then are brought to be separated from the gas in existing or agglomerated form and then be separated from the gas.

The scrubber plant has, as can be understood of what is above indicated, two essential functions, firstly to bring gaseous components containing Hg to be dissolved or in any other way be absorbed by the washing liquid, essentially water or a dilute aqueous liquid and secondly to mechanically put together components having an extremely particle form to bigger aggregates or agglomerates by means of a heavy turbulent action. By this action so big aggregates or agglomerates of particles are formed so they can be brought to separate from the gaseous phase, where they otherwise are suspended, and they can be recovered, collected and be separated from the gas and the washing liquid. Scrubber plants of this type are known and are used for example in dust cleaning gases from combustion or other chemical or metallurgical processes. Such plants are based on the action of extremely heavy turbulence of the incoming gas by means of inter alias gas velocity acceleration and retardation.

By the method according to the invention the mercury content of a gas having been treated in a chloride washing plant be decreased at least one ten power down to below 20 µg/m³.

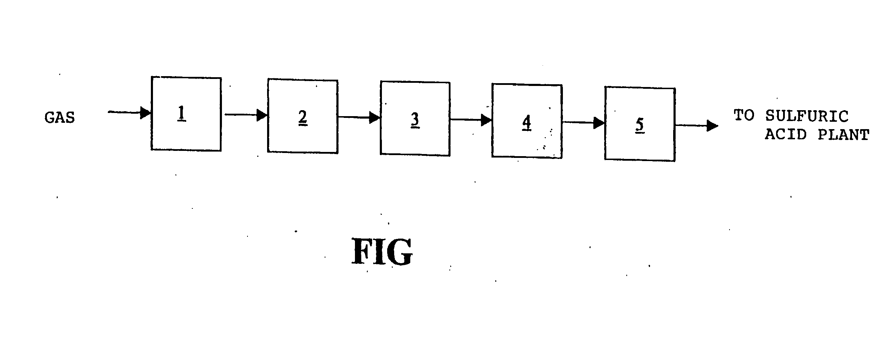

The invention will now be more in detail described with reference to the single figure (FIG.) of the drawing which figure shows a schematic diagram of a plant for carrying out the method in an embodiment, where sulphur dioxide containing gas from a roaster is treated, and where a gas essentially free from Hg is removed for the production of sulphuric acid.

The sulphur dioxide containing gas from a roasting furnace is cooled and cleansed in a couple of steps and is subsequently led to a conventional wet filter 1, in which the most part of the solid particles is removed. The gas essentially freed from particles are then led to a chloride washing plant 2 of the type as having been described above. The chloride washing plant 2 takes up the most of the ingoing gaseous Hg (so called Hg°), but leave traces of ingoing extremely fine-particular, newly formed Hg₂Cl₂ mist, HgCl₂ vapour, residual Hg° and drops carried by the gas from the absorption solution containing dissolved HgCl₂ and solid Hg₂Cl₂ The gas having been treated in the chloride washer is then led to a scrubber plant 3, in which the washing liquid will absorb most of the HgCl₂ vapour and Hg particles of different origin and having different physical and chemical kinds are detached or agglomerated and then detached. On the other hand any Hg° is trapped poorer and in those cases here being illustrated using sulphur dioxide containing gas even the opposite reaction may occur as can result in new-forming of Hg°, which is stripped off from the aqueous solution in the scrubber 3 due to the reducing properties of the sulphur dioxide. The withdrawn part of the washing liquid in the scrubber 3, which is comparatively small and also contains only a small Hg content, may without any problems be led to any of the gas cleansing steps up-streams the chloride washer 2. The withdrawn liquid may be compensated by additional liquid supply.

In those cases a further elimination of remaining traces of Hg is wanted or required, thus being essentially consisting of Hg°, such an elimination can be obtained according an embodiment of the invention in a further step, such as illustrated by the figure (FIG.), by leading the gas via a fan 4 further to a filter 5, for example a selenium filter or a carbon filter, where the last traces of Hg° are removed. Such filters are described, for example in US-A- 3,786,619, with Se as the absorbing agent, or a filter as described in US-A- 4,206,183, where sulphur, syntethic or nature sulphides are used as the absorbing agent.

In normal case the gas after a scrubber treatment has Hg amounts being low enough for actual demand and requirement and for the environment laws of today. Any further treatment, for example elimination for of any remaining elementary Hg is thus neither necessary nor required, since a surprising great amount of Hg is taken up by the scrubber treatment. However, it is possible using relatively simple means to complete the method according to the invention to further eliminate such extremely small contents of elementary Hg, which can pass or be formed in a scrubber. Such an embodiment is described above as a further step, where a filter 5 is used for an essential total Hg° elimination. A total elimination of Hg traces may, thus, be required or prescribed in the future with possible more stringent requirements for releasing Hg. A further elimination of Hg° may, however, in many cases advantageously be performed even in the scrubber by adding complex formers, for example of the type halogenides or pseudohalogenides to the washing liquid.

An essential advantage with the method according to the invention is that both new and older types of chloride washers may be upgraded even in different degrees to meet any future increased demands on the Hg removal.

## Claims

1. A method for eliminating remaining traces of mercury in gases, such as roaster gases containing SO₂, and which have been treated in a chloride washer for removing elementary Hg, the gas is introduced to a scrubber plant where the same is washed with a washing liquid, the washing liquid essentially being water or dilute aqueous liquid **characterized in that** the incoming gas is subjected to a heavy turbulent and mechanical action in the scrubber by means of velocity acceleration and retardation so as to physically put together any Hg, HgCl₂ and Hg₂Cl₂ and other compounds of Hg present in particle or drop form into bigger aggregates or agglomerates and that thus formed aggregates or agglomerates and present bigger particles are brought to be separated from the gas and then be collected and removed.

2. A method according to Claim 1, **characterized in that** the washing liquid contains complex formers, such as halogenides and/or pseudohalogenides.

3. A method according to any of Claim 1 and 2, **characterized in that** the treated gas is brought to a filter for the absorption of any remaining gaseous elementary Hg.

4. A method according to Claim 3, **characterized in that** the filter has selenium as an active compound.

5. A method according to Claim 3, **characterized in that** the filter has sulphur, sulphides or other sulphur compounds as an active compound.

6. A method according to Claim 5, **characterized in that** the filter has activated lead sulphide as an active compound.

## Patentansprüche

1. Ein Verfahren zum Eliminieren von Restspuren von Quecksilber in Gasen, wie zum Beispiel SO₂-haltige Röstgase, die in einem Chloridwäscher behandelt wurden, um das elementare Hg zu entfernen, das Gas wird einer Reinigungsanlage zugeführt und mit einer Waschflüssigkeit gereinigt, bei der es sich im wesentlichen um Wasser oder eine verdünnte wässrige Flüssigkeit handelt, **dadurch gekennzeichnet, dass** das zugeführte Gas in der Reinigungsanlage durch Beschleunigen und Verzögern starken Turbulenzen und mechanischen Bewegungen ausgesetzt wird, um jegliches Hg, HgCl₂ und Hg₂Cl₂ und sonstige vorhandene Hg-Verbindungen in Partikel- oder Tropfenform physikalisch zu binden und größere Aggregate oder Agglomerate zu bilden, wobei die gebildeten Aggregate oder Agglomerate und vorhandene größere Partikel vom Gas getrennt und anschließend gesammelt und abgeführt werden.

2. Ein Verfahren nach Anspruch 1, **dadurch gekennzeichnet, dass** die Waschflüssigkeit komplexe Bildner enthält, wie zum Beispiel Halogenide und/oder Pseudohalogenide.

3. Ein Verfahren nach einem der Ansprüche 1 und 2, **dadurch gekennzeichnet, dass** das behandelte Gas einem Filter zugeführt wird, um jegliche Reste von gasförmigem elementarem Hg zu absorbieren.

4. Ein Verfahren nach Anspruch 3, **dadurch gekennzeichnet, dass** im Filter Selen als wirksame Substanz verwendet wird.

5. Ein Verfahren nach Anspruch 3, **dadurch gekennzeichnet, dass** im Filter Schwefel, Sulfide oder andere Schwefelverbindungen als wirksame Substanz verwendet werden.

6. Ein Verfahren nach Anspruch 5, **dadurch gekennzeichnet, dass** im Filter aktiviertes Bleisulphid als wirksame Substanz verwendet wird.

## Revendications

1. Méthode permettant d'éliminer les traces résiduelles de mercure dans les gaz, tels que les gaz de fours contenant du SO₂, qui ont été traités dans un appareil de lavage au chlorure afin d'éliminer le mercure élémentaire, le gaz est introduit dans un complexe de lavage, où il est lavé à l'aide d'un liquide de lavage constitué essentiellement d'eau ou de liquide aqueux dilué, **caractérisé par le fait que** le gaz entrant est soumis, dans l'épurateur, à une action hautement turbulente et mécanique par accélération et décélération de vitesse de manière à ce que toutes les molécules de Hg, HgCl₂, Hg₂Cl₂ et d'autres composants de mercure présents sous la forme de particules ou de gouttes soient regroupés dans des agrégats ou des agglomérats de taille supérieure; les agrégats ou agglomérats ainsi formés et les particules de taille supérieure présentes sont séparés du gaz, puis collectés et supprimés.

2. Méthode selon la revendication 1, **caractérisée par le fait que** le liquide de lavage contient des constituants complexes, tels que des halogénides et/ou des pseudohalogénides.

3. Méthode selon l'une quelconque des revendications 1 ou 2, **caractérisée par le fait que** le gaz traité fait l'objet d'un filtrage destiné à absorber toute particule de mercure élémentaire gazeuse résiduelle.

4. Méthode selon la revendication 3, **caractérisée par le fait que** le filtre comprend du sélénium comme composant actif.

5. Méthode selon la revendication 3, **caractérisée par le fait que** le filtre comprend du soufre, des sulfides ou d'autres composants sulfurés comme composants actifs.

6. Méthode selon la revendication 5, **caractérisée par le fait que** le filtre comprend du sulfure de plomb activé comme composant actif.
